# EUROPEAN PATENT APPLICATION

(11) **EP 1 684 099 A2**
(43) Date of publication of application: **26.07.2006**
(21) Application number: 06001118.6
(22) Date of filing: 19.01.2006
(51) Int. Cl.: G02B 5/30, G03F 7/00

(54) **Wire grid polarization film, method for manufacturing wire grid polarization film, liquid crystal display using wire grid polarization film, and method for manufacturing mold for forming wire grids thereof**

(30) Priority: 19.01.2005 KR 2005005123
(71) Applicant: LG ELECTRONICS INC., Seoul 150-721 (KR)
(72) Inventor: Lee, Ki-Dong, -gu, Seongnam-si, Gyeonggi-Do 463-030 (KP)
(74) Representative: von Hellfeld, Axel

(57) **Abstract**

A wire grid polarization film, a method for manufacturing the same, and a method for manufacturing a mold for forming grids thereof are disclosed. The wire grid polarization film comprises a substrate, a grid structure layer stacked on the substrate, and at least one metallic layer formed on one side of the grid structure layer. The method for manufacturing the wire grid polarization film comprises preparing a substrate, applying a grid structure layer to an upper surface the substrate, forming a grid pattern on the grid structure layer, and depositing a metal layer on the grid pattern. The method for manufacturing the mold comprises applying a photoresist film on a substrate, patterning the photoresist film using interference fringes via laser, developing the photoresist film, stacking a material for forming a grid pattern of the wire grid polarization film on the photoresist film, and removing the substrate and the photoresist film.

## Description

### BACKGROUND OF THE INVENTION

### Field of the Invention

The present invention relates to a wire grid polarization film, and a method for manufacturing a mold for forming a grid of the same.

### Description of the Related Art

Generally, a liquid crystal display (LCD) is a flat panel display which is used in a wide variety of applications including mobile phones, notebook computers, monitors, televisions, etc. The LCD is a device for transmitting or shielding light by changing an arrangement of liquid crystals via application of electric signals to respective pixels in a liquid crystal panel positioned between two polarizing plates. Thus, a separate light source is required to operate the LCD, and the LCD can be classified into a reflective type LCD and a transmissive type LCD according to a method of using the light source. The reflective type LCD employs an external light source such as sunlight or a room lamp, and is configured such that light from the external light source is incident to a front side of an LCD panel, and is reflected by a reflector positioned at a rear side of the LCD panel to a viewer. The transmissive type LCD employs a backlight unit (BLU) as the light source, and is configured such that light uniformly emitted from the BLU at a rear side of the LCD panel passes through the rear side of the LCD panel to a viewer.

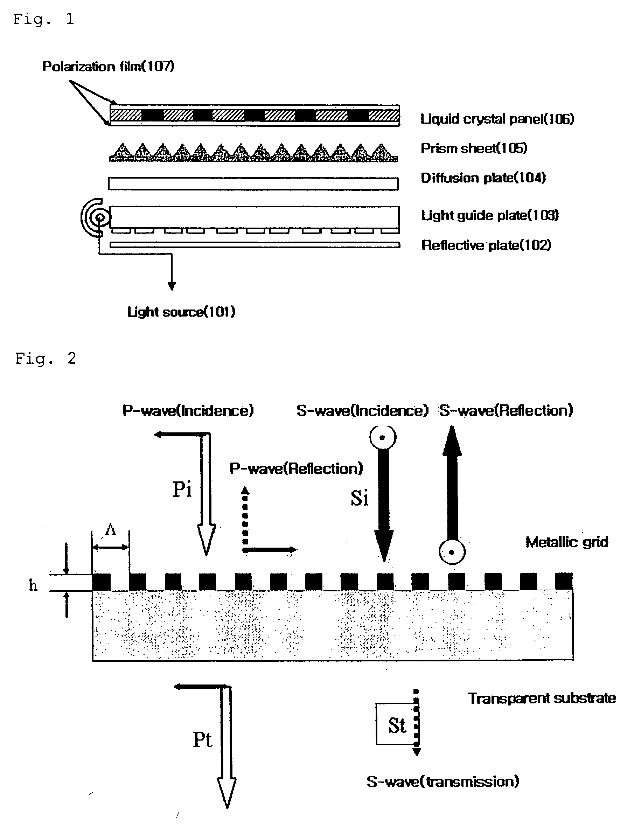

Fig. 1 shows the structure of the transmissive type LCD. An LCD which employs both an external light source and a backlight unit is referred to as a trans-reflective type LCD. Generally, the BLU comprises a light source such as fluorescent lamps and LEDs, a light guide panel 103 to guide light to an entire surface on a front side of an LCD panel, diffusion films 104, a prism sheet 105, and the like. With this structure, a substantial portion of light emitted from the light source is lost while passing through the BLU. In addition, since the diffusion films disposed on the front and rear sides of the LCD panel are absorbent, they absorb 50 % of light directed towards the LCD panel. Thus, light reaching the viewer of the LCD is 10 % or less of the light emitted from the light source. This means that the LCD has a low utilization efficiency of light. In this regard, enhancement in utilization efficiency of light enables an increase in utilization period of a battery for portable devices, and a reduction of power consumption in a large sized LCD TV.

As technology for increasing brightness of the LCD by enhancing the utilization efficiency of light of the LCD, a dual brightness enhancement film (DBEF) available from Minnesota Mining & Manufacturing Co. in U.S.A. has been evaluated as a unique means. The DBEF is a multilayer polymeric thin film type reflective polarizing plate. For the case of the transmissive type LCD, the DBEF is positioned between the BLU and the LCD panel to increase brightness to a degree of 60 %. In other words, a specific polarized light reflected by the reflective polarizing plate is changed in polarization while being reflected again through the BLU positioned at a lower portion, and then some of the polarized light passing through the polarization plate, i.e. the DBEF, is used for increasing the brightness. However, since the DBEF is manufactured to form a multilayer film by crossing an optically anisotropic polymer film and an optically isotropic polymer film, it is expensive, and made via a complicated manufacturing process.

As another type of reflective polarizing plate, there is a wire grid polarizer. It has been well known in the art that metal wires arranged in parallel selectively transmit or reflect an electromagnetic wave according to components of polarized light. If an arranging period of the metal wires is shorter than half of a wavelength of an incident electromagnetic wave, a component of the polarized light in parallel with the metal wires, i.e., s-wave, is reflected, whereas a component of the polarized light vertical to the metal wires, i.e., p-wave, is transmitted. By using this phenomenon, it is possible to manufacture a planar polarizer which has excellent polarization efficiency, high transmissivity, and a wide view angle.

Fig. 2 shows a wire grid polarizer.

Performance of the wire grid polarization film can be represented by a polarization extinction ratio and transmissivity. In order to have a higher polarization extinction ratio, the wire grid polarization film must satisfy a prerequisite that a period of a metal grid is significantly shorter than a wavelength of an incident light. However, since a shorter period of the metal grid complicates a process of manufacturing the wire grid polarizer, the wire grid polarization film has been used mainly in the range of microwaves or infrared radiation. However, as fine patterns can be formed via development of a semiconductor manufacturing apparatus and an exposing technique, it becomes possible to manufacture a wire grid polarizer operating in the wavelength band of visible light.

The range of the visible light generally refers to a wavelength band from 400 to 700 nm. Accordingly, for the wire grid polarization film operating in the wavelength band of visible light, the period of the metal grid must be at least 200 nm or less in order to achieve a polarization property to some extent. Furthermore, in order to exhibit excellent performance or the same performance as that of a conventional polarizer, it is desirable that the metallic grids have a period in the range of 100's nm.

The conventional wire grid polarization film operating in the wavelength band of visible light is used on a transparent glass substrate, and is manufactured by a semiconductor process such as dry etching. Thus, the conventional wire grid polarization film has a restriction in an increase in area thereof so as to be available for a medium or large sized display of 10 inches or more, and is very expensive. In addition, due to use of the glass substrate, the conventional wire grid polarization film has problems of heavy weight and large thickness even if the wire grid polarization film is manufactured to have a large area.

### SUMMARY OF THE INVENTION

The present invention has been made to solve the above problems, and it is an object of the present invention to provide a method for manufacturing wire grid polarizers of a large area in mass production at low costs, and a mold for the wire grid polarization film for mass production.

In accordance with one aspect of the present invention, the above and other objects can be accomplished by the provision of a wire grid polarization film, comprising: a substrate; a grid structure layer stacked on the substrate; and at least one metallic layer formed on one side of the grid structure layer.

Preferably, the substrate is composed of a polymer plastic substrate having an excellent optical transmissivity, and the polymer plastic substrate is made of polyethylenterephtalate (PET).

Preferably, the grid structure layer is formed using a heat-curable or UV-curable polymer thin film allowing easy molding, and the polymer thin film is made of at least one material selected from acryl, polycarbonate and polyurethane.

Preferably, the grid structure layer has a grid period of 220 nm or less.

Preferably, each ridge of the,grid structure layer has a cross-section selected from a triangular shape, a rectangular shape, a trapezoid shape, a semicircular shape, and a semi-elliptical shape.

Preferably, the at least one metallic layer comprises a plurality of metallic layers formed in a longitudinal direction of the substrate.

Preferably, the wire grid polarization film further comprises a protective film coated on an upper surface of the metallic layer and an upper surface of the grid structure layer where the metallic layer is not formed thereon.

In accordance with another aspect of the present invention, an apparatus for manufacturing a wire grid polarization film is provided, comprising: a grid forming part to form a grid pattern on a substrate; a metal deposition part to deposit a metallic layer on one side of the grid pattern; and a protective film coating part to coat a protective film on an upper surface of the metallic layer and an upper surface of the grid pattern where the metallic layer is not formed thereon.

Preferably, the grid forming part comprises a mold roller having the same cross-section as that of the grid pattern to be manufactured.

In accordance with further another aspect of the present invention, a method for manufacturing a wire grid polarization film is provided, comprising the steps of: preparing a substrate; applying a grid structure layer to an upper surface the substrate; forming a grid pattern on the grid structure layer; and depositing a metal layer on the grid pattern.

Preferably, the method further comprises coating a protective film on the grid pattern.

Preferably, the metal layer is deposited only on one side of each ridge of the grid pattern.

Preferably, the grid pattern is formed by a mold roller.

In accordance with yet aspect of the present invention, a method for manufacturing a mold for forming a grid of a wire grid polarization film is provided, comprising the steps of: applying a photoresist film on a substrate, followed by patterning the photoresist film using interference fringes via laser; developing the photoresist film, followed by stacking a material for forming a grid pattern of the wire grid polarization film on the photoresist film; and removing the substrate and the photoresist film.

Preferably, the material is at least one selected from metal, polymer plastic, silicone, and quartz.

### BRIEF DESCRIPTION OF THE DRAWINGS

The foregoing and other objects and features of the present invention will be more clearly understood from the following detailed description taken in conjunction with the accompanying drawings, in which:
Fig. 1 shows a general structure of an LCD panel;
Fig. 2 shows the structure and a principle of a wire grid polarizer;
Fig. 3 shows a stacked position of a wire grid polarization film for enhancing brightness of an LCD in accordance with one embodiment of the present invention;
Fig. 4 shows the structure of a wire grid polarization film in accordance with the embodiment;
Figs. 5a to 5e show a method for manufacturing a wire grid polarization film in accordance with one embodiment of the present invention;
Fig. 6 shows an apparatus for manufacturing a wire grid polarization films in mass production via a roll-to-roll process in accordance with one embodiment of the present invention; and
Figs. 7a to 7e are a method for manufacturing a mold master via an interference lithography process in accordance with one embodiment of the present invention.

### DESCRIPTION OF THE PREFERRED EMBODIMENTS

Preferred embodiments of the present invention will be described in detail with reference to the accompanying drawings, in which like components are denoted by the same reference numerals. Well-known functions and constructions which can make the subject matter of the present invention unclear will be omitted hereinafter.

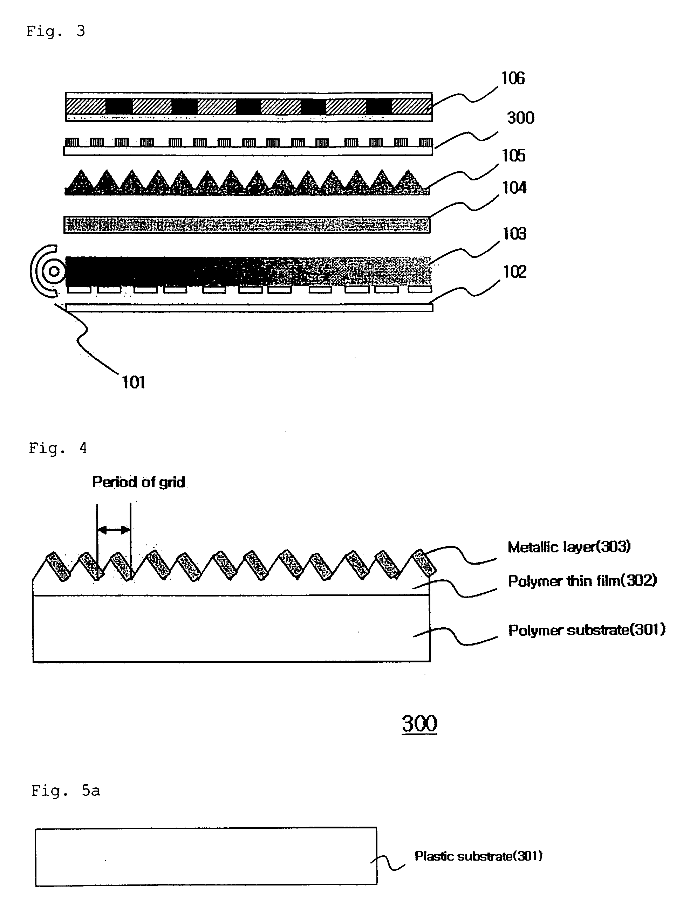

Fig. 3 shows a stacking sequence of an LCD panel using a wire grid polarization film in accordance with one embodiment of the present invention.

In this embodiment, the LCD panel comprises a light source 101, a reflective plate 102, a light guide plate 103, a diffusion plate 104, a prism sheet 105, a wire grid polarization film 300, and a liquid crystal panel 106.

Fig. 3 schematically shows a stacked position of a wire grid polarization film 300 according to this embodiment.

Referring to Fig. 3, the reflective plate 102 is positioned at the lowermost portion of the LCD panel, and the light guide plate 103, the diffusion plate 104 and the prism sheet 105 are sequentially stacked on the reflective plate 102. The light source 101 is positioned at one side of the light guide plate 103. The wire grid polarization film 300 of the present invention, and the liquid crystal panel 106 are sequentially stacked on the prism sheet 105.

The wire grid polarization film 300 is positioned between a conventional backlight unit and the LCD panel. The prism sheet 105 of Fig. 3 is selectively used, and may be positioned on the wire grid polarization film 300. That is, it is possible to constitute an optical film in various shapes. A portion of polarized light reflected by the wire grid polarization film 300 is changed in direction while being reflected back again through the backlight unit positioned below the LCD panel, and then passes through the wire grid polarization film 300, thereby increasing brightness.

Fig. 4 is a perspective view illustrating a grid structure of the wire grid polarization film according to the embodiment.

According to the embodiment, the wire grid polarization film comprises a polymer substrate 301, a polymer thin film 302 stacked on the polymer substrate 301, and a metal layer 303 stacked on the polymer thin film 302.

Fig. 4 schematically shows a method for forming the grid structure according to this embodiment.

Referring to Fig. 4, the wire grid polarization film comprises a polymer plastic film substrate 301 having excellent mechanical properties and a good optical transmissivity, and a grid structure layer, which allows easy formation and has a good optical transmissivity, on the polymer plastic film 301. The grid structure layer comprises a grid structure composed of the polymer thin film 302, and the metallic layer 303 formed on one side of each ridge of the grid structure. The grid structure must have a grid period of 220 nm in order to provide a good polarization efficiency in an overall wavelength band of visible light. The shorter the grid period is, the higher a polarization extinction ratio is.

Preferably, the polymer plastic film substrate 301 is formed of a polymer material such as PET and the like. The polymer thin film 302 having the grid structure formed thereon is formed of, for example, acryl, polycarbonate or polyurethane. Preferably, the metallic layer 303 is formed of metal, such as aluminum, silver and the like, which has a good reflectance in an overall wavelength band of visible light.

As for a cross-section of each ridge of a grid formed on the polymer thin film, it may have not only a triangular shape as shown in Fig. 4, but also a rectangular shape, a trapezoid shape, a semicircular shape, a semi-elliptical shape, etc. In this regard, an important point is that the metallic layer is deposited only on one side of each figure constituting each ridge of the grid. In other words, for the case of the rectangular or trapezoid shape, the metallic layer is deposited on an upper face and a portion of one side among three faces protruding to an upper portion. The shape of the metallic layer is changed according to a deposition angle of the metallic layer. Here, an important point is that metal is prevented from being deposited on other portions of the one side and a trench portion (a depressed portion) of each ridge of the grid. Thus, when depositing the metallic layer, a method of spraying metal at about 45 degrees with respect to the grid after forming the grid, which will be described in detail below, is used.

With this method, the metallic layer 303 has an elongated shape formed in one dimension on one side of each ridge of the grid, or in some cases, on the upper end of each ridge thereof in a direction of the grid. Generally, if the polarizer has a good transmissivity, the polarization extinction ratio thereof deteriorates. The transmissivity and the polarization extinction ratio are determined according to utility of the polarizer, and if the metallic layer is thickened, the transmissivity is enhanced whereas the polarization extinction ratio deteriorates. That is, the polarization extinction ratio varies significantly according to change of the thickness and width of the metallic layer, and the wire grid polarization film is preferably manufactured in consideration of the transmissivity.

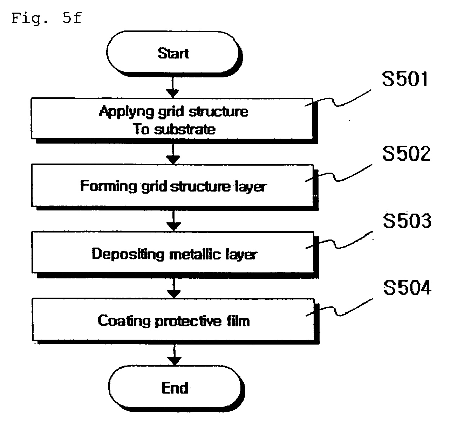

Figs. 5a to 5e show a method for manufacturing a wire grid polarization film in accordance with one embodiment of the present invention.

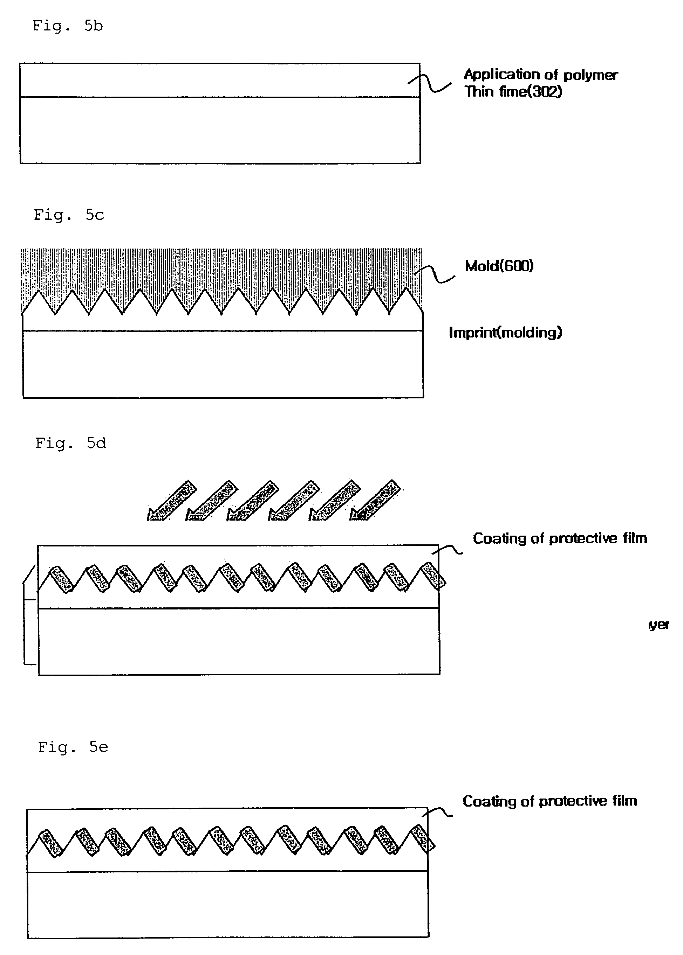

Referring to Figs. 5a and 5b, first, a plastic film substrate 301 is prepared (Fig. 5a), and then a polymer thin film 302 is deposited thereon (Fig. 5b) (S501). Preferably, the thin film is composed of a heat-curable or UV-curable polymer thin film, and allows for the formation of fine patterns. Next, a grid structure layer is formed on the polymer thin film 302 using a mold having a fine pattern formed thereon (Fig. 5c) (S502). Formation of the grid structure is performed differently according to the properties of the polymer thin film 302. Specifically, for the heat-curable polymer thin film, the formation of the grid structure is performed at an increased temperature, and for the UV-curable polymer thin film, the formation of the grid structure is performed by illuminating with ultraviolet rays and applying a suitable pressure. Then, a metallic layer 303 is deposited on one side of each ridge of the grid structure in a slanted direction (Fig. 5d) (S503). The metallic layer 303 is deposited on the grid structure by spraying metallic powder in a predetermined direction with respect to the polymer thin film 302. Finally, a protective film 304 is coated on the grid structure and the metallic layer (Fig. 5e) (S504). The protective film 304 serves to prevent corrosion of aluminum, and damage of surface when using the film.

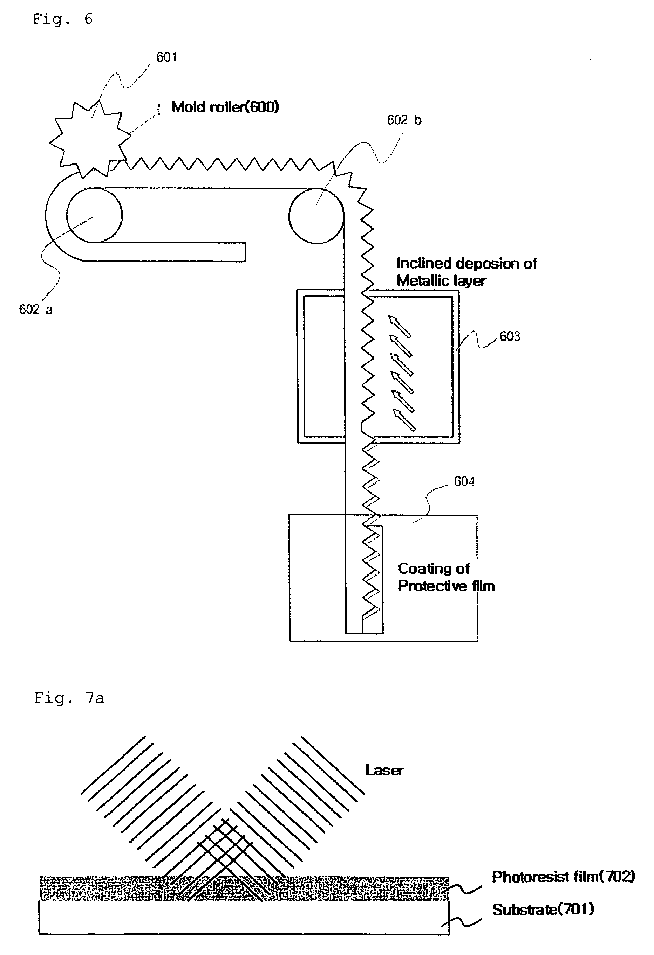

Fig. 6 shows an apparatus for manufacturing the wire grid polarizers in mass production according to one embodiment of the invention.

In this embodiment, the apparatus for manufacturing the wire grid polarization film in mass production comprises a grid forming part 601, a metal deposition part 602, and a protective film coating part 604.

Fig. 6 schematically shows a method of continuously producing the wire grid polarizers using a mold roller 600 of the apparatus according to this embodiment.

Referring to Fig. 6, while a substrate is conveyed by means of a roller 602a, a grid pattern is formed on the substrate by the mold roller 600 of the grid forming part 601. Then, the substrate having the grid pattern formed thereon is conveyed to the metal deposition part 603 by means of a roller 602b. At the metal deposition part 603, a metallic layer is formed on one side of each ridge of the grid pattern. Then, the substrate having the metallic layer formed thereon is conveyed to the protective film coating part 604 where a protective film is formed on the uppermost layer.

Although the respective steps of the process can be performed using separate plastic substrates by separate apparatuses, a roll-to-roll type process is adopted in order to allow high speed production of the wire grid polarizers. In Fig. 6, the roll-to-roll type process of manufacturing the wire grid polarizers is shown.

The mold of the invention may be made of any of various materials, such as metal, polymer plastic, silicone, quartz, and the like. In order to allow production of a large area polarizer, the mold is preferably made of nickel or polymer plastic. The mold roller can be manufactured via various lithography processes, and in particular, a laser interference lithography process is most efficient.

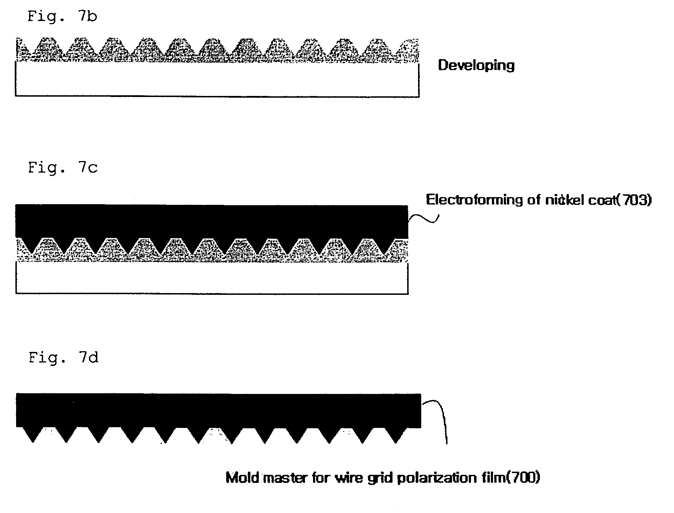

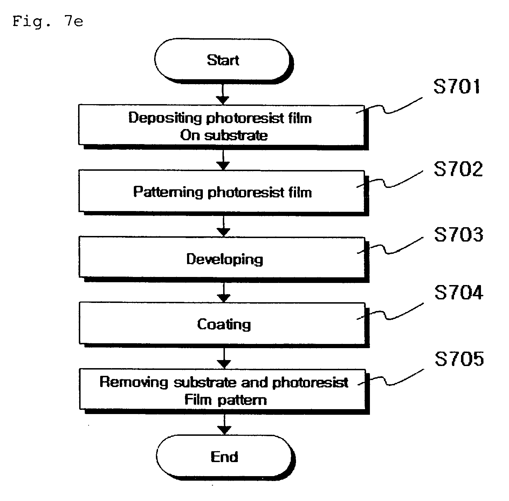

Figs. 7a to 7e are views illustrating a method for manufacturing the mold roller of Fig. 6 in accordance with one embodiment of the present invention.

Figs. 7a to 7e schematically show the laser interference lithography process for manufacturing the mold master used for the wire grid polarization film according to this embodiment.

Referring to Figs. 7a to 7e, the laser interference lithography process comprises the steps of applying a photoresist film 702 on a substrate 701 (S701), and patterning the photoresist film 702 by forming interference fringes thereon via illumination by laser in two directions (Fig. 7a) (S702). At this time, a minimum period of the pattern to be formed is half of a wavelength of the laser. After exposing and developing the photoresist film (Fig. 7b) (S703), electroforming of nickel is performed to form a nickel coat 703 on the photoresist pattern 702 (Fig. 7c) (S704). Finally, a nickel mold master 700 is completed by separating the substrate 701 and the photoresist pattern 702 (Fig. 7d) (S705). The nickel mold master 700 may be directly employed for forming a pattern on the polymer thin film. Alternatively, after imprinting the pattern of the nickel mold master 700 on a separate plastic film, the separate plastic film is used as a mold.

As apparent from the above description, the present invention enables mass production of large sized wire grid polarization films at high speed, allowing easy application of the wire grid polarization films for enhancement in brightness of a liquid crystal display and other fields.

It should be understood that the embodiments and the accompanying drawings have been described for illustrative purposes and the present invention is limited by the following claims. Further, those skilled in the art will appreciate that various modifications, additions and substitutions are allowed without departing from the scope and spirit of the invention as set forth in the accompanying claims.

## Claims

1. A wire grid polarization film, comprising: a substrate; a grid structure layer stacked on the substrate; and at least one metallic layer formed on one side of the grid structure layer.

2. The wire grid polarization film according to claim 1, wherein the substrate is composed of a polymer plastic substrate having an excellent optical transmissivity.

3. The wire grid polarization film according to claim 2, wherein the polymer plastic substrate is made of polyethylenterephtalate (PET).

4. The wire grid polarization film according to claim 1, wherein the grid structure layer is formed using a heat-curable or UV-curable polymer thin film allowing easy molding.

5. The wire grid polarization film according to claim 4, wherein the polymer thin film is made of at least one material selected from acryl, polycarbonate, and polyurethane.

6. The wire grid polarization film according to claim 1, wherein the grid structure layer has a grid period of 220 nm or less.

7. The wire grid polarization film according to claim 1, wherein each ridge of the grid structure layer has a cross-section selected from a triangular shape, a rectangular shape, a trapezoid shape, a semicircular shape, and a semi-elliptical shape.

8. The wire grid polarization film according to claim 1, wherein the at least one metallic layer comprises a plurality of metallic layers formed in a longitudinal direction of the substrate.

9. The wire grid polarization film according to claim 1, further comprising: a protective film coated on an upper surface of the metallic layer and an upper surface of the grid structure layer where the metallic layer is not formed thereon

10. A liquid crystal display comprising a wire grid polarization film according to claim 1.

11. An apparatus for manufacturing a wire grid polarization film, comprising: a grid forming part to form a grid pattern on a substrate; a metal deposition part to deposit a metallic layer on one side of the grid pattern; and a protective film coating part to coat a protective film on an upper surface of the metallic layer and an upper surface of the grid pattern where the metallic layer is not formed thereon.

12. The apparatus according to claim 11, wherein the grid forming part comprises a mold roller having the same cross-section as that of the grid pattern to be manufactured.

13. A method for manufacturing a wire grid polarization film, comprising the steps of: preparing a substrate; applying a grid structure layer to an upper surface the substrate; forming a grid pattern on the grid structure layer; and depositing a metal layer on the grid pattern.

14. The method according to claim 13, further comprising: coating a protective film on the grid pattern.

15. The method according to claim 13, wherein the metal layer is deposited only on one side of each ridge of the grid pattern.

16. The method according to claim 13, wherein the grid pattern is formed by a mold roller.

17. A method for manufacturing a mold for forming a grid of a wire grid polarization film, comprising the steps of: applying a photoresist film on a substrate, followed by patterning the photoresist film using interference fringes via laser; developing the photoresist film, followed by stacking a material for forming a grid pattern of the wire grid polarization film on the photoresist film; and removing the substrate and the photoresist film.

18. The method according to claim 17, wherein the material is at least one selected from metal, polymer plastic, silicone, and quartz.
